## Europäisches Patentamt
## European Patent Office
## Office européen des brevets

(19)

(11) Veröffentlichungsnummer: **0 186 725**
**B1**

(12) **EUROPÄISCHE PATENTSCHRIFT**

(45) Veröffentlichungstag der Patentschrift:
**01.06.88**

(21) Anmeldenummer: **85102508.0**

(22) Anmeldetag: **06.03.85**

(51) Int. Cl.⁴: **B 32 B 27/30**, F 02 F 7/00,
F 02 M 35/16

(54) **Formteil aus PVC.**

(30) Priorität: **30.10.84 DE 3439670**

(43) Veröffentlichungstag der Anmeldung:
**09.07.86 Patentblatt 86/28**

(45) Bekanntmachung des Hinweises auf die Patenterteilung:
**01.06.88 Patentblatt 88/22**

(84) Benannte Vertragsstaaten:
**AT BE DE FR GB IT NL SE**

(56) Entgegenhaltungen:
**US - A - 3 533 900**

(73) Patentinhaber: **Firma Carl Freudenberg, Höhnerweg 4,
D-6940 Weinheim/Bergstrasse (DE)**

(72) Erfinder: **Andorf, Paul, Leitenweg 27,
D-8071 Wettstetten (DE)**
Erfinder: **Jäger, Hans, Am Holderstrauch 4,
D-6940 Weinheim (DE)**

(74) Vertreter: **Weissenfeld-Richters, Helga, Dr.,
Höhnerweg 2, D-6940 Weinheim/Bergstrasse (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Formteil aus PVC, umfassend wenigstens einen ersten Wandungsbereich aus einem Werkstoff niedriger Härte und einem zweiten Wandungsbereich aus einem Werkstoff höherer Härte.

Auf ein Formteil der vorgenannten Art nimmt das deutsche Gebrauchsmuster 7 716 857 Bezug. Es bildet den Ansaugkrümmer des Verbrennungsmotors in einem Kraftfahrzeug und weist in axial aufeinanderfolgenden Abschnitten abwechselnd Wandungsbereiche einer grossen und Wandungsbereiche einer kleinen Härte auf. Neben einer guten Formbeständigkeit resultiert hieraus eine gute Isolierung der vom Motor erregten Vibrationen. Die Herstellung setzt jedoch eine handwerkliche Verklebung der axial aufeinanderfolgenden Abschnitte voraus, was unter wirtschaftlichen Gesichtspunkten nicht ohne weiteres vertretbar ist. Die während der Benutzung eingeleiteten Vibrationen können ausserdem in Verbindung mit dem im Inneren herrschenden Unterdruck zur Herauslösung von Bruchstücken aus den harten Wandungsbereichen führen, was schwerwiegende Motorschäden zur Folge haben kann. Sie wurden nach Werkstattaufenthalten mit entsprechenden Formteilen ausgestatteter Kraftfahrzeuge immer wieder beobachtet.

Der Erfindung liegt die Aufgabe zugrunde, das eingangs genannte Formteil derart weiterzuentwickeln, dass die genannten Schwierigkeiten bei einer vereinfachten Herstellung nicht mehr zu erwarten sind.

Diese Aufgabe wird erfindungsgemäss bei einem Formteil der eingangs genannten Art dadurch gelöst, dass der erste Wandungsbereich die Wandung des Formteiles parallel zu dessen gesamter Oberfläche ganz durchdringt, dass der zweite Wandungsbereich auf den ersten Wandungsbereich parallel zu dessen Erstreckung aufgeschichtet ist und dass der erste und der zweite Wandungsbereich einstückig ineinander übergehen.

Beide Wandungsbereiche des erfindungsgemäss vorgeschlagenen Formteiles bestehen aus PVC und sie unterscheiden sich dadurch, dass der erste Wandungsbereich eine niedrigere Härte aufweist als der zweite Wandungsbereich.

Darüber hinaus ist der erste Wandungsbereich gestaltbestimmend für das Formteil und durchdringt dieses auf seiner gesamten Erstreckung. Der zweite Wandungsbereich ist an den Stellen, an denen der erste Wandungsbereich einer Verstärkung bedarf, auf diesen aufgeschichtet und einstückig verbunden. Er erfährt durch diese Art der Festlegung jedoch seinerseits ebenfalls eine Verstärkung, beispielsweise gegen eine Herauslösung von Bruchstücken nach einer gewaltsamen Krafteinleitung. Diese können daher bei einer bestimmungsgemässen Verwendung als Ansaugkrümmer auch nicht mehr in den Verbrennungsmotor geraten und zu Schäden führen. Dennoch ist die Herstellung des erfindungsgemäss vorgeschlagenen Formteiles auf denkbar einfache Weise möglich.

Durch die Verwendung von PVC für beide Wandungsbereiche des erfindungsgemäss vorgeschlagenen Formteiles lässt sich dieses besonders leicht erhalten, wenn man für die Herstellung des zweiten Wandungsbereiches einen PVC-Werkstoff verwendet, der nach der Formgebung durch eine Behandlung mit energiereichen Strahlen chemisch vernetzbar ist. Die Bildung der zweiten Wandungsbereiche kann in diesem Falle ebenso wie diejenige der ersten Wandungsbereiche durch Anwendung an sich bekannter Formgebungsverfahren erfolgen, zweckmässig durch Tauchen. Die anschliessende Strahlenbehandlung vermag jedoch keine Veränderung der ersten Wandungsbereiche in ihren Eigenschaften zu bewirken, sondern hat lediglich in Abhängigkeit von der Art des zur Anwendung gelangenden Werkstoffes und der Intensität der Strahlenbehandlung eine nachträgliche Steigerung der Härte der zweiten Wandungsbereiche zur Folge.

Eine besonders gute nachträgliche Härtung der zweiten Wandungsbereiche durch Bestrahlung lässt sich erzielen, wenn in den für deren Herstellung verwendeten, polymeren Werkstoff 5–70 Gew.% einer durch Bestrahlung mit ionisierenden Strahlen vernetzenden oder polymerisierenden Substanz in gleichmässiger Verteilung eingemischt werden. Dabei kann es sich um niedermolekulare Substanzen mit einer oder mit mehreren Doppelbindungen handeln, wie beispielsweise Acrylate, Metacrylate oder Ester des Allylalkohols. Diese lassen sich in der erforderlichen Menge entweder bei der Herstellung oder auch durch nachträgliche Compoundierung in der erforderlichen gleichmässigen Verteilung in den polymeren Werkstoff einbringen. In Abhängigkeit von Art und Menge der zugesetzten, vernetzbaren Substanzen sowie in Abhängigkeit von der Energiedosis während der nachträglichen Bestrahlung lässt sich die Werkstoffhärte gezielt steuern. Die gegenseitige Abstimmung lässt sich im Einzelfalle mit der erforderlichen Genauigkeit durch Vorversuche ermitteln.

Die angewendete ionisierende Strahlung kann unterschiedlicher Natur sein. In vielen Fällen wird der Verwendung einer hoch energiereichen Strahlung, wie beispielsweise einer Gamma- oder einer Röntgenstrahlung der Vorzug gegeben, weil diese ohne wesentliche Abschwächung durch ggf. vorhandene Füllstoffe die Wandstärke auch grössere Werkstücke aus PVC zu durchdringen und damit werkstoffmässig zu modifizieren vermag. Bei der Herstellung von Formteilen mit einer geringeren Wandstärke wird hingegen häufig der Elektronenstrahlung der Vorzug gegeben, weil diese mit einem geringeren Sicherheitsrisiko belastet und daher kostengünstiger verfügbar ist.

Des weiteren ist es möglich, für die Herstellung des ersten Wandungsbereiches eine schäumbare Werkstoffzusammensetzung zu verwenden und diese nach dem Aufbringen auf den zweiten Wandungsbereich aufzutreiben, was beispielsweise durch nachträgliche Erwärmung erfolgen kann. Die Erzielung einer in sich geschlossenen homogenen Oberflächenhaut ist dabei ohne weiteres möglich.

Das erfindungsgemässe Formteil lässt sich insbesondere durch Anwendung des Tauchverfahrens kostengünstig herstellen und zeichnet sich neben einer guten Formbeständigkeit durch eine völlige Sicherheit gegen Zersplittern aus. Eine Ausbildung und Verwendung als Ansaugkrümmer wird daher bevorzugt.

In der in der Anlage beigefügten Zeichnung ist eine beispielhafte Ausführung des erfindungsgemässen Formteils in längsgeschnittener Darstellung wiedergegeben. Dieses umfasst einen schlauchförmig ausgebildeten ersten Wandungsbereich 1, der die Gestalt des Formteiles im wesentlichen bestimmt, und der auf der Innenseite in einen Abstand aufweisenden Bereichen durch ringförmig gestaltete zweite Wandungsbereiche 2 verstärkt ist. Der Schlauch ist dadurch sehr leicht biegbar, weist aber dennoch eine gute Unterdruckstabilität auf. Störende Vorsprünge sind weder im Bereich der Aussen- noch im Bereich der Innenseite vorhanden.

Die vorliegende Erfindung wird nachfolgend anhand der Herstellung eines Faltenbalges weiter erläutert:

Die Erzeugung verläuft in drei aufeinanderfolgenden Stufen:

In der ersten Stufe wird zunächst der mittlere Teil des Faltenbalges, der später als hartes Segment ausgebildet sein soll, durch Tauchen erzeugt. Dazu wird ein faltenbalgähnlich aussehender, rotationssymmetrischer Formling verwendet, der an dem einen Ende in Achsrichtung bewegbar aufgehängt ist und der an dem anderen Ende von einer Manschette umschlossen ist. Durch die Manschette wird eine Benetzung des unteren Endes des Formlings durch die in der ersten Stufe verwendete PVC-Paste verhindert. In diesem Bereich kann es dadurch während des Eintauchens des Formlings auch nicht zur Ausbildung einer Schicht aus PVC kommen.

Der Formling wird so in die PVC-Paste eingetaucht, dass ein Drittel seiner axialen Erstreckung die Oberfläche der verwendeten PVC-Paste überragt. Auch in diesem Bereich kann es während des ersten Tauchvorganges nicht zur Anlagerung einer Schicht aus PVC kommen. Die Bildung einer entsprechenden Schicht ist somit auf den mittleren Teil des Formlings beschränkt. Die diesbezüglich zur Anwendung gelangende PVC-Mischung hat die folgende Zusammensetzung:

| | |
|---|---|
| PVC[1] | 100 Gew.-Teile |
| Weichmacher[2] | 40 Gew.-Teile |
| Trimethylolpropantrimethacrylat[3] | 60 Gew.-Teile |
| Stabilisator[4] | 2 Gew.-Teile |
| Pigmente | 1 Gew.-Teil |

[1] handelsübliche Pasten-PVC-Typen.
[2] für die Herstellung von Weich-PVC-Mischungen geeignete Weichmacher, z.B. Dioctylphthalat, Dioctyladipat, Benzylbutylphthalat, Dibutylphthalat, Dinonylphthalat, Didecylphthalat, Trikresylphosphat, polymere Weichmacher, usw.
[3] anstelle von Trimethylolpropantrimethacrylat können auch andere ein oder mehrere Doppelbindungen enthaltende, durch Bestrahlung mit ionisierenden Strahlen vernetzbare Substanzen (z.B. Acrylate, Methacrylate, Ester des Allylalkohols u.a.) bzw. Gemische solcher Substanzen verwendet werden.
[4] handelsübliche Stabilisatoren z.B. Ba, Cd, Zn, Pb, Ca, K, Sn, usw. enthaltende organische Verbindungen oder metallfreie organische Stabilisatoren.

Anmerkung: Der Mischung können auch kleine Mengen Inhibitoren (Radikalfänger), z.B. Gemische alkyl- und aralkylierter Phenole, zugesetzt werden, um ein vorzeitiges Verhärten des Wandungsbereiches infolge teilweiser Vernetzung beim Gelieren zu vermeiden (wegen evtl. Entformungsschwierigkeiten). Die Strahlenvernetzung wird durch solche Zusätze nicht merklich behindert.

Der nur im mittleren Bereich mit der vorstehend beschriebenen Mischung beschichtete Formling wird anschliessend aus der Paste entnommen und von der sein unteres Ende abdeckenden Manschette befreit. Er wird unmittelbar in eine zweite PVC-Mischung überführt und in dieser vollständig eingetaucht. Die in dieser zweiten Stufe verwendete PVC-Mischung hat die folgende Zusammensetzung:

| | |
|---|---|
| PVC[1] | 100 Gew.-Teile |
| Weichmacher[2] | 100 Gew.-Teile |
| Stabilisator[4] | 2 Gew.-Teile |
| Pigmente | 1 Gew.-Teil |

Der Formling ist anschliessend von einer auf den mittleren Bereich kontinuierlich überziehenden, in sich geschlossenen Schicht aus PVC bedeckt. Er wird nach Entnahme aus der zuletzt verwendeten Mischung 20 Minuten bei 180°C in einem Heizofen erhitzt, wodurch die PVC-Beschichtung geliert. Nach dem Abkühlen, z.B. durch Eintauchen in ein Wasserbad, wird der Faltenbalg, der sich durch eine gute Elastizität auszeichnet von dem Formling entnommen. Er besteht innenseitig im mittleren Bereich aus PVC der in der ersten Stufe verwendeten Zusammensetzung und im übrigen aus PVC, der in der zweiten Stufe verwendeten Zusammensetzung. Beide Bereiche gehen nahtlos ineinander über. Sowohl aussen- als auch innenseitig zeichnet sich der Faltenbalg durch eine vollkommen glatte Oberfläche aus.

In der dritten Stufe wird der somit in fester Form vorliegende Faltenbalg der Einwirkung einer ionisierenden Strahlung ausgesetzt, um eine nachträgliche Härtung des aus der zuerst auf den Formling aufgebrachten Beschichtung gebildeten Wandungsbereiches zu erhalten. Zur Anwendung gelangt diesbezüglich eine Elektronenstrahlung von 3 Megavolt, die von drei verschiedenen Seiten gleichzeitig gegen die Oberfläche des Faltenbalges gerichtet wird. Eine nur einseitige Bestrahlung erfordert ein kontinuierliches Drehen des Formteiles während der Behandlung. Es resultiert dann ebenfalls eine gleichmässige Modifizierung der Formteile.

Die Verweildauer des Faltenbalges ist so bemessen, dass sich eine Oberflächendosis von 40–60 KJ/kg ergibt. Der aus der zuerst auf den Formling aufgebrachten Mischung bestehende Wandungsbereich des Faltenbalges weist anschliessend eine Härte Shore A von ca. 98 auf. Die übrigen Teile bleiben demgegenüber in ihrer Härte nahezu unverändert und haben eine Härte von 56 Shore A, jeweils gemessen nach DIN 53 505. Der Faltenbalg lässt sich hierdurch im Bereich seiner Endstücke leicht in radialer Richtung aufweiten, was die Montage sehr erleichtert. Die Aussteifung im mittleren Bereich bewirkt demgegenüber eine gute Unterdruckstabilität. Dennoch ist es nicht zu befürchten, dass sich im Anschluss an eine gewaltsame Deformierung aus der Innenseite des nachträglich gehärteten, mittleren Bereiches Bruchstücke herauslösen und in das angeschlossene Leitungssystem gelangen. Ihre Bildung ist vielmehr durch die den gehärteten Teil des Faltenbalges aussenseitig überdeckende Schicht aus weichelastischem Polstermaterial vom Ansatz her erschwert insofern, als die weichelastische Schicht eine gewisse Dämpfung auftreffender Schläge bewirkt. Die Auswirkungen sind daher stark gemildert. Darüber hinaus ist zu berücksichtigen, dass die gehärtete Schicht einen einstückigen Bestandteil der weichelastischen Polsterschicht bildet. Selbst Bestandteile aus einer völlig zerstörten, gehärteten Schicht vermögen sich dadurch nicht ohne weiteres von der weichelastischen Wandung zu lösen, sondern verbleiben auch in zerstörter Form in ihrer ursprünglichen Position. Absolute Sicherheit lässt sich diesbezüglich erzielen, wenn der nachträglich gehärtete Wandungsbereich beiderseits mit weichelastischen Schichten verbunden ist. Die allgemeine Herstellungsweise kann der vorstehend beschriebenen entsprechen, wobei der Formling jedoch vorausgehend zu dem Aufbringen der beschriebenen Schichtenfolge mit einer zusätzlichen Schicht aus langsam gelierender Paste versehen wird, die beim fertigen Formteil innen liegt. Diese Paste kann die folgende Zusammensetzung haben:

| PVC[1] | 100 Gew.-Teile |
| Weichmacher[5] | 100 Gew.-Teile |
| Stabilisator[4] | 2 Gew.-Teile |
| Pigmente | 1 Gew.-Teil |

[5] Langsam gelierender Weichmacher, z.B. (Dioctyladipat oder Didecyladipat).

Diese Schicht erfährt bei der abschliessenden Strahlenbehandlung keine Steigerung der Härte.

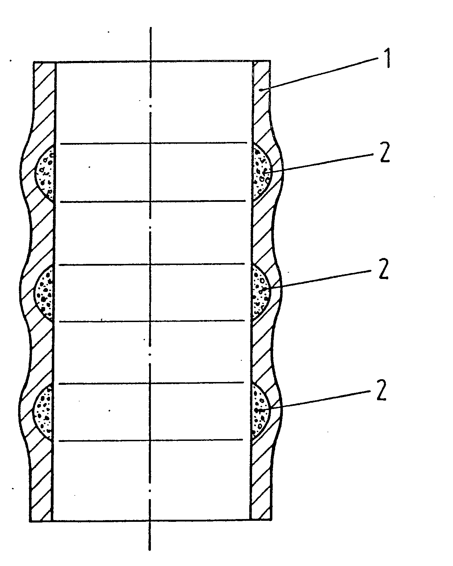

## Patentansprüche

1. Formteile aus PVC, umfassend wenigstens einen ersten Wandungsbereich aus einem PVC-Werkstoff niedriger Härte und wenigstens einen zweiten Wandungsbereich aus einem PVC-Werkstoff höherer Härte, dadurch gekennzeichnet, dass der erste Wandungsbereich (1) die Wandung des Formteiles parallel zu dessen gesamter Oberfläche ganz durchdringt, dass der zweite Wandungsbereich (2) auf den ersten Wandungsbereich (1) parallel zu dessen Erstreckung aufgeschichtet ist und dass der erste und der zweite Wandungsbereich einstückig ineinander übergehen.

2. Formteil nach Anspruch 1, dadurch gekennzeichnet, dass der den ersten Wandungsbereich bildende Werkstoffkörper geschäumt ist.

3. Formteil nach Anspruch 1–2, dadurch gekennzeichnet, dass der den zweiten Wandungsbereich bildende Werkstoffkörper strahlend vernetzt ist.

## Revendications

1. Pièce moulée en chlorure de polyvinyle comprenant au moins une première zone de paroi constituée d'une matière première à base de chlorure de polyvinyle d'une faible dureté, ainsi qu'au moins une deuxième zone de paroi constituée d'une matière première à base de chlorure de polyvinyle d'une dureté plus élevée, caractérisée en ce que la première zone de paroi (1) traverse entièrement la paroi de la pièce moulée parallèlement à toute sa surface, en ce que la deuxième zone de paroi (2) est lamifiée sur la première zone de paroi (1) parallèlement à la distance sur laquelle elle s'étend et en ce que la première et la deuxième zone de paroi viennent se confondre l'une dans l'autre d'une seule pièce.

2. Pièce moulée selon la revendication 1, caractérisée en ce que le corps de matière première formant la première zone de paroi est transformé en mousse.

3. Pièce moulée selon les revendications 1 et 2, caractérisée en ce que le corps de matière première formant la deuxième zone de paroi est réticulé par irradiation.

## Claims

1. A shaped PVC article comprising at least one first wall region made from a PVC material of lower hardness and at least one second wall region made from a PVC material of greater hardness, characterised in that the first wall region (1) fully penetrates the wall of the shaped article parallel to its entire surface, in that the second wall region (2) is coated onto the first wall region (1) parallel to its extension, and in that the first and the second wall regions blend with one another in one piece.

2. A shaped article according to claim 1, characterised in that the material body forming the first wall region is expanded.

3. A shaped article according to claim 1 or 2, characterised in that the material body forming the second wall region is radiation cross-linked.